# EUROPÄISCHE PATENTSCHRIFT

(11) **EP 3 294 672 B1**
(45) Veröffentlichungstag und Bekanntmachung des Hinweises auf die Patenterteilung: **23.12.2020**
(21) Anmeldenummer: 16718327.6
(22) Anmeldetag: 21.04.2016
(51) Int. Cl.: C01B 33/029, C01B 33/035

(54) **VERFAHREN UND ANLAGE ZUR ZERSETZUNG VON MONOSILAN**
PROCESS AND SYSTEM FOR DECOMPOSING MONOSILANE
PROCÉDÉ ET INSTALLATION POUR LA DÉCOMPOSITION DE MONOSILANE

(30) Priorität: 15.05.2015 DE 102015209008
(43) Veröffentlichungstag der Anmeldung: 21.03.2018
(73) Patentinhaber: Schmid Silicon Technology GmbH, 72250 Freudenstadt (DE)
(72) Erfinder: SCHMID, Christian, 72250 Freudenstadt (DE); PETRIK, Georgij, 71032 Böblingen (DE); HAHN, Jochem, 72108 Rottenburg am Neckar (DE)
(74) Vertreter: Patentanwaltskanzlei Cartagena
(86) Internationale Anmeldenummer: PCT/EP2016/058939
(87) Internationale Veröffentlichungsnummer: WO 2016/184638

(56) Entgegenhaltungen:
- CA-A- 728 584
- DE-A1-102008 017 304
- US-A- 4 784 840
- US-A- 5 139 762
- G. HSU: "Fines in Fluidized Bed Silane Pyrolysis", JOURNAL OF THE ELECTROCHEMICAL SOCIETY, Bd. 131, Nr. 3, 1. Januar 1984 (1984-01-01), Seite 660, XP055119057, ISSN: 0013-4651, DOI: 10.1149/1.2115668

## Beschreibung

Die vorliegende Erfindung betrifft ein Verfahren und eine Anlage zur Zersetzung von Monosilan zwecks Herstellung von hochreinem Silizium.

Hochreines Silizium wird in der Regel in einem mehrstufigen Prozess ausgehend von metallurgischem Silizium, das in der Regel noch einen relativ hohen Anteil an Verunreinigungen aufweist, hergestellt. Zur Aufreinigung des metallurgischen Siliziums kann dieses beispielsweise in ein Trihalogensilan wie Trichlorsilan (SiHCl₃) überführt werden, das anschließend thermisch zu hochreinem Silizium zersetzt wird. Eine derartige Vorgehensweise ist beispielsweise aus der DE 29 19 086 A1 bekannt. Alternativ dazu kann man hochreines Silizium auch durch thermische Zersetzung von Monosilan (SiH₄) gewinnen, wie es zum Beispiel in der DE 33 11 650 A1, in der CA 728 584 A oder in der DE 10 2008 017 304 A1 beschrieben ist.

In den letzten Jahren ist die Gewinnung von Reinstsilizium mittels thermischer Zersetzung von Monosilan immer stärker in den Vordergrund getreten. So ist es zum Beispiel aus der US 4787840 A bekannt, Monosilan in einem Fließbettreaktor an hocherhitzten Siliziumpartikeln zu zersetzen.

In der DE 10 2011 089 695 A1 und in der DE 10 2009 003 368 B3 sind Reaktoren beschrieben, in die Monosilan eingedüst werden kann und in denen hocherhitzte Silizium-Stäbe angeordnet sind, an denen das Monosilan zersetzt wird. Das dabei anfallende Silizium wird in metallischer Form auf der Oberfläche der Silizium-Stäbe abgeschieden.

Damit sich die Abscheidung besser kontrollieren lässt, ist es üblich, in Reaktoren wie z.B. dem in der DE 10 2009 003 368 B3 beschriebenen kein reines Monosilan einzuspeisen, sondern ein Gemisch aus Monosilan und einem Trägergas wie Wasserstoff. Allerdings muss darauf geachtet werden, dass sich dieses Gasgemisch nicht zu stark erhitzt. Ab einer Temperatur von 400 °C besteht die Gefahr, dass eine Zersetzung des Monosilans bereits in der Gasphase eintritt, was zur verstärkten Bildung unerwünschter Nebenprodukte führen kann. Um dies zu vermeiden, wird die Konzentration an Monosilan in dem Gemisch gewöhnlich sehr niedrig gehalten.

In der Praxis ist die Temperatur des Gasgemischs innerhalb eines Reaktors sehr schwer zu kontrollieren, da innerhalb des Reaktors große Temperaturgefälle bestehen. Diese Probleme werden noch verstärkt, wenn zur Abscheidung größerer Mengen Silizium die in den Reaktor eingespeiste Menge des Gasgemischs erhöht wird. In modernen Reaktoren liegt der angestrebte Durchsatz an monosilanhaltigem Gasgemisch bei gegebenenfalls mehr als 10.000 Nm³ (Normkubikmetern). Bei einem derart hohen Durchsatz kommt es innerhalb des Reaktors leicht zu turbulenten Strömungen, infolge derer ein unerwünscht effizienter Wärmeaustausch zwischen dem Gasgemisch und den hocherhitzten Silizium-Stäben auftritt. Dieser bewirkt zum einen die erwähnte unerwünschte Erhöhung der Temperatur des Gasgemischs. Zum anderen werden die Silizium-Stäbe abgekühlt, was zu einem erhöhten Energieverbrauch führt.

Diese Nachteile wurden bislang in Kauf genommen, da man mit turbulenten Strömungen durchaus auch positive Effekte verbindet. Es ist gewünscht, dass sich Silizium möglichst gleichmäßig auf allen Bereichen der erwähnten hocherhitzten Silizium-Stäbe abscheidet. Eine Verwirbelung des in die Reaktoren eingespeisten Gasgemischs wird dafür als förderlich angesehen.

Der vorliegenden Erfindung lag die Aufgabe zugrunde, ein Verfahren zur thermischen Zersetzung von Monosilan bereitzustellen, bei dem auch bei einem Durchsatz an monosilanhaltigem Gasgemisch von mehr als 10.000 Nm³ die aus dem Stand der Technik bekannten Probleme nicht oder nur in vergleichsweise geringem Maß auftreten.

Diese Aufgabe wird gelöst durch das Verfahren mit den Merkmalen des Anspruchs 1. Bevorzugte Merkmale des erfindungsgemäßen Verfahrens sind in den abhängigen Ansprüchen 2 bis 12 angegeben. Darüber hinaus ist auch die zur Durchführung des erfindungsgemäßen Verfahrens geeignete Anlage mit den Merkmalen des Anspruchs 13 von der vorliegenden Erfindung umfasst. Ein bevorzugtes Merkmal der erfindungsgemäßen Anlage ist im abhängigen Anspruch 14 angegeben. Der Wortlaut sämtlicher Ansprüche wird hiermit durch Bezugnahme zum Inhalt der vorliegenden Beschreibung gemacht.

Bei dem erfindungsgemäßen Verfahren zur Zersetzung von Monosilan wird ein monosilanhaltiger Gasstrom in einem Kreislaufsystem, das einen Reaktor zur Zersetzung des im Gasstrom enthaltenen Monosilans umfasst, zirkuliert. Der Kreislauf umfasst stets die folgenden Einzelschritte:
(1) In diesem Schritt wird ein monosilanhaltiger Gasstrom in den Reaktor eingespeist. Bei dem Gasstrom handelt es sich in Analogie zu eingangs erwähntem Stand der Technik bevorzugt um ein Gasgemisch aus einem Trägergas und Monosilan. Als Trägergas kommt besonders bevorzugt Wasserstoff zum Einsatz.
   Als Reaktor eignen sich grundsätzlich die in der DE 10 2011 089 695 A1 und die in der DE 10 2009 003 368 B3 beschriebenen Reaktoren. Auf Eigenschaften besonders geeigneter Reaktoren wird noch detaillierter eingegangen.
(2) In diesem Schritt wird der Gasstrom mit einer hocherhitzten Oberfläche innerhalb des Reaktors in Kontakt gebracht. An dieser Oberfläche zersetzt sich ein Teil des im Gasstrom enthaltenen Monosilans. Die Konzentration an Monosilan im Gasstrom fällt dabei ab. In Folge der Zersetzung scheidet sich eine feste Siliziumschicht auf der hocherhitzte Oberfläche ab. Bei dieser Schicht handelt es sich um das gewünschte Verfahrensprodukt.
(3) In diesem Schritt wird der Gasstrom aus dem Reaktor abgeführt. Der aus dem Reaktor abgeführte Gasstrom weist eine deutlich niedrigere Konzentration an Monosilan auf als der in den Reaktor eingespeiste Gasstrom. Darüber hinaus weist der Gasstrom eine deutlich höhere Temperatur auf als im Moment seiner Einspeisung in den Reaktor.
(4) In diesem Schritt wird der aus dem Reaktor abgeführte Gasstrom aufbereitet. Der Prozess der Aufbereitung umfasst insbesondere ein mindestens teilweises Ausgleichen, vorzugsweise ein vollständiges Ausgleichen, des in Folge der Zersetzung auftretenden Abfalls der Monosilan-Konzentration. Dies erfolgt durch entsprechende Zugabe von Monosilan. Darüber hinaus kann die Aufbereitung des Gasstroms in bevorzugten Ausführungsformen zusätzlich Reinigungs- und Kühlschritte umfassen.
(5) In diesem Schritt wird der aus Schritt (4) resultierende Gasstrom in den Reaktor wieder eingespeist. Der Kreislauf schließt sich hier.

Besonders bevorzugt wird während der Abscheidung innerhalb des Kreislaufsystems ein Betriebsdruck im Bereich von 2,5 bar bis 10 bar (absolut) eingestellt. Innerhalb dieses Bereiches sind Werte im Bereich von 3 bar bis 10 bar (absolut), insbesondere von 4 bar bis 8 bar (absolut), besonders bevorzugt von 4 bar bis 7 bar (absolut), weiter bevorzugt.

Gleichzeitig wird dafür Sorge getragen, dass innerhalb des Reaktors keine turbulenten Strömungen auftreten. Dies wird dadurch gewährleistet, dass der Gasstrom mit einer Geschwindigkeit kleiner 7,5 m/s, bevorzugt kleiner 5 m/s, besonders bevorzugt kleiner 2,5 m/s, in den Reaktor eintritt. Innerhalb des Kreislaufsystems ist der Betriebsdruck bevorzugt im Wesentlichen konstant. Druckschwankungen innerhalb des Kreislaufsystems sind zwar nicht völlig vermeidbar, allerdings meist sehr klein.

Zur Inbetriebnahme des Reaktors wird das Kreislaufsystem in aller Regel erst mit Stickstoff gespült und anschließend mit Wasserstoff gefüllt, bis der gewünschte Betriebsdruck erreicht ist. Zur Zirkulation des Wasserstoffs innerhalb des Kreislaufsystems wird in aller Regel ein Verdichter oder ein Gebläse benötigt.

Es ist bevorzugt, dass die Konzentration an Monosilan im gemäß Schritt (1) in den Reaktor einzuspeisenden Gasstrom während der Abscheidung in einem Bereich zwischen 0,5 Vol.-% und 5 Vol.-%, bevorzugt zwischen 0,5 Vol.-% und 3 Vol.-%, gehalten wird.

Grundsätzlich ist man bestrebt, die Konzentration an Monosilan im Reaktor niedrig zu halten. Zersetzungsreaktionen sollten nicht in der Gasphase erfolgen, sondern an der hocherhitzten Oberfläche. Ansonsten erhält man, wie eingangs erwähnt, unerwünschte, in der Regel staubförmige Nebenprodukte. In der Gasphase sollten möglichst wenige Zusammenstöße zwischen Silanmolekülen (untereinander), Zersetzungsprodukten (untereinander) sowie zwischen Silanmolekülen und Zersetzungsprodukten erfolgen. Durch den hohen Betriebsdruck wird die Bildung der Nebenprodukte überraschenderweise zurückgedrängt, ohne dies mit geringen Abscheidungsraten erkaufen zu müssen.

Vorzugsweise wird die Konzentration an Monosilan im Gasstrom in Schritt (4) um nicht mehr als 1 Vol.-%, bevorzugt um nicht mehr als 0,5 Vol.-%, besonders bevorzugt um nicht mehr als 0,25 Vol.-%, angehoben. Durch diese Maßnahme wird die Bildung der staubförmigen Nebenprodukte noch weiter zurückgedrängt.

Besonders bevorzugt wird mit steigender Dicke der Siliziumschicht auf der Oberfläche die Menge an Monosilan des gemäß Schritt (1) in den Reaktor eingespeisten Gasstroms pro Zeiteinheit (und damit die pro Zeiteinheit in den Reaktor eingespeiste Masse an Monosilan) graduell erhöht. Oder mit anderen Worten, der Massenstrom des in den Reaktor eingespeisten Monosilans wird erhöht.

Hierzu wird besonders bevorzugt die Konzentration an Monosilan im Gasstrom in Schritt (4) graduell angehoben. Der in Folge der Zersetzung auftretende Abfall der Monosilan-Konzentration wird in dieser Ausführungsform graduell kompensiert oder überkompensiert. Die Volumenkonzentration an Monosilan im Gasstrom steigt also etwas an. Die oben definierten bevorzugten Konzentrationsgrenzwerte für die Konzentration an Monosilan im Gasstrom sind in bevorzugten Ausführungsformen zu beachten. Die Anhebung der Konzentration erfolgt bevorzugt stetig oder in mehreren aufeinanderfolgenden Schritten.

Alternativ oder zusätzlich zu dieser besonders bevorzugten Ausführungsform kann zur Erhöhung des Massenstroms des in den Reaktor eingespeisten Monosilans auch die Strömungsgeschwindigkeit, mit der der monosilanhaltige Gasstrom in dem Kreislaufsystem zirkuliert, erhöht werden, insbesondere mittels des erwähnten Verdichters oder Gebläses. Die oben definierten bevorzugten Grenzwerte für die Geschwindigkeit, mit der der Gasstrom in den Reaktor eintritt, sind in zu beachten.

In der Praxis hat sich eine Kombination der beiden bevorzugten Maßnahmen als vorteilhaft erwiesen. Bevorzugt wird im laufenden Betrieb die Strömungsgeschwindigkeit, mit der der monosilanhaltige Gasstrom in dem Kreislaufsystem zirkuliert, nach und nach erhöht. Damit im Reaktor keine Turbulenzen erzeugt werden und damit der Wärmeaustausch zwischen der hocherhitzten Oberfläche in dem Reaktor und dem Gasstrom nicht zu groß wird, sollte die Strömungsgeschwindigkeit aber nicht zu hoch eingestellt werden. Deshalb wird meist ergänzend die Konzentration an Monosilan im Gasstrom nach und nach angehoben.

In aller Regel vergrößert sich mit fortschreitender Betriebsdauer und zunehmender Dicke der Siliziumschicht auch die hocherhitzte Oberfläche innerhalb des Reaktors, an der sich Monosilan zersetzen kann. Wird die Masse an Monosilan, die pro Zeiteinheit in den Reaktor eingespeist wird, nicht gesteigert, so erhöht sich die Dicke der abgeschiedenen Siliziumschicht immer langsamer. Dem wird durch die beschriebenen Maßnahmen entgegengewirkt. Die Wachstumsrate der abgeschiedenen Siliziumschicht wird dabei ausschließlich über die Masse des in den Reaktor eingespeisten Monosilans gesteuert.

Alternativ zu den beschriebenen bevorzugten Maßnahmen wäre es auch denkbar, zur Erhöhung der in den Reaktor pro Zeiteinheit eingespeisten Masse an Monosilan den Betriebsdruck anzuheben. In den meisten Fällen ist die bevorzugte Anhebung der Monosilan-Konzentration jedoch die geeignetere Verfahrensvariante.

Es wurde bereits kurz erwähnt, dass Druckschwankungen innerhalb des Kreislaufsystems meist nicht völlig vermeidbar sind. In aller Regel weichen maximale und minimale Drücke innerhalb des Kreislaufsystems aber um nicht mehr als 500 mbar, bevorzugt um nicht mehr als 300 mbar, voneinander ab. Abweichungen von weniger als 200 mbar, besonders bevorzugt sogar von weniger als 100 mbar, sind noch weiter bevorzugt. Geringe Schwankungen können beispielsweise am Reaktoreingang und am Reaktorausgang auftreten. Die größte Druckdifferenz stellt sich jedoch meist am Verdichter oder Gebläse ein.

Zu einer Anhebung des Betriebsdrucks kann es während des laufenden Betriebs in Folge der im Reaktor stattfindenden Zersetzung (aus einem Mol Monosilan werden 2 Mol Wasserstoff gebildet) kommen. Zum anderen wird der Betriebsdruck durch die Monosilan-Zugabe erhöht. In bevorzugten Ausführungsformen erfolgt daher in regelmäßigen oder unregelmäßigen Zeitabständen oder kontinuierlich ein Druckausgleich, indem Gas aus dem Kreislaufsystem abgelassen wird. Dieser Druckausgleich kann beispielsweise mittels eines Überdruckventils geregelt werden.

Es ist bevorzugt, dass die Temperatur des Gasstroms, der in Schritt (1) und in Schritt (5) in den Reaktor eingespeist wird, auf einen Wert im Bereich von 25 °C bis 75 °C, insbesondere im Bereich von 40 °C bis 60 °C, eingestellt wird. Beim Abführen des Gasstroms aus dem Reaktor liegt dessen Temperatur in der Regel im Bereich von 400 °C bis 700 °C, insbesondere im Bereich von 500 °C bis 600 °C.

Zur Durchführung des erfindungsgemäßen Verfahrens sind nicht nur Reaktoren wie die in der DE 10 2011 089 695 A1 und die in der DE 10 2009 003 368 B3 beschriebenen geeignet. Vielmehr ist es auch möglich, dass als Reaktor ein Wirbelschichtreaktor zum Einsatz kommt, bei dem die hocherhitzte Oberfläche mittels hocherhitzter Silizium-Partikel in einer Wirbelschicht bereitgestellt wird. Besonders bevorzugt erfolgt die Zersetzung des Monosilans jedoch an hocherhitzten Silizium-Stäben.

Wie bereits angesprochen, wird die Wachstumsrate der abgeschiedenen Siliziumschicht bevorzugt über die Masse des in den Gasstrom eingespeisten Monosilans gesteuert. Mit fortschreitender Betriebsdauer und zunehmender Dicke der Siliziumschicht wird die Masse an Monosilan, die pro Zeiteinheit in den Reaktor eingespeist wird, erhöht.

Bevorzugt wird die Masse an Monosilan in dem gemäß Schritt (1) bzw. (5) in den Reaktor einzuspeisenden Gasstrom proportional zum Anstieg der Größe der hocherhitzten Oberfläche erhöht.

Besonders bevorzugt ist die hocherhitzte Silizium-Oberfläche auf eine Temperatur zwischen 800 °C und 1000 °C, besonders bevorzugt auf eine Temperatur von ca. 900 °C, eingestellt.

In bevorzugten Ausführungsformen wird in dem aus dem Reaktor abgeführten Gasstrom die Konzentration an Monosilan durch eine Messung bestimmt. Gegebenenfalls wird zusätzlich am Reaktoreingang die Konzentration an Monosilan in dem in den Reaktor einzuspeisenden Gasstrom bestimmt. In Abhängigkeit des oder der Messergebnisse können dann die Monosilan-Zugabe in Schritt (4) und damit die Konzentration an Monosilan in dem gemäß Schritt (1) bzw. (5) in den Reaktor einzuspeisenden Gasstrom sowie letztendlich auch die Masse des pro Zeiteinheit in den Reaktor eingespeisten Monosilans sowie gegebenenfalls die graduelle Erhöhung dieser Masse mit fortschreitender Betriebsdauer gesteuert oder geregelt werden.

In weiteren bevorzugten Ausführungsformen werden die Dicke der auf der hocherhitzten Oberfläche abgeschiedenen Siliziumschicht rechnerisch oder durch eine Messung bestimmt und - in Abhängigkeit des Messergebnisses - die Monosilan-Zugabe in Schritt (4) und damit die Konzentration an Monosilan in dem gemäß Schritt (1) bzw. (5) in den Reaktor einzuspeisenden Gasstrom sowie letztendlich auch die Masse des pro Zeiteinheit in den Reaktor eingespeisten Monosilans sowie gegebenenfalls die graduelle Erhöhung dieser Masse mit fortschreitender Betriebsdauer gesteuert oder geregelt.

Die Dicke der Siliziumschicht kann beispielsweise durch eine optische Messung bestimmt werden. Bevorzugt wird allerdings die Änderung des elektrischen Widerstands der Silizium-Stäbe verfolgt. Alternativ können auch über die Betriebsdauer die Änderung der Monosilan-Konzentration im Reaktor verfolgt werden (bevorzugt kontinuierliche Bestimmung der Monosilan-Konzentration am Reaktoreingang und am Reaktorausgang) und hieraus (unter Kenntnis des durch den Reaktor geführten Gasvolumens) die Zunahme der Dicke der Siliziumschicht rechnerisch bestimmt werden.

Alternativ kann auch die Masse an Monosilan, die in das Kreislaufsystem eingespeist wird, erfasst werden. Da aus Erfahrungswerten bekannt ist, zu welchem Anteil das eingespeiste Monosilan zu metallischem Silizium umgesetzt wird, lässt sich hieraus die Dickenänderung errechnen.

Besonders bevorzugt werden im Rahmen eines erfindungsgemäßen Verfahrens Reaktoren eingesetzt, die sich durch mindestens eines der folgenden Merkmale auszeichnen:
- Bevorzugt umfassen die Reaktoren einen Reaktorboden und ein darauf montiertes Reaktoroberteil, die zusammen einen Reaktorinnenraum einschließen, in dem die oben erwähnten hocherhitzten Silizium-Stäbe angeordnet werden können. Zur Anordnung der Silizium-Stäbe innerhalb des Reaktors sind Halterungen vorgesehen, die in den Reaktorboden integriert sind oder in oder auf dem Reaktorboden angeordnet sind.
- Innerhalb der Reaktoren sind die Silizium-Stäbe bevorzugt vertikal zum Reaktorboden ausgerichtet und weisen in bevorzugten Ausführungsformen innerhalb des Reaktorinnenraums senkrecht nach oben.
- Die Silizium-Stäbe sind weisen jeweils zwei freie Enden auf, wobei jedem dieser Enden eine der Halterungen zugeordnet ist. Bevorzugt weisen sie z.B. eine U-Form auf.

Die in der DE 10 2011 089 695 A1 und die in der DE 10 2009 003 368 B3 beschriebenen Reaktoren erfüllen diese Merkmale.

Der monosilanhaltige Gasstrom wird bevorzugt über Einlassdüsen in den Reaktor eingespeist. Diese Düsen sind vorzugsweise in den erwähnten Reaktorboden integriert oder auf dem Reaktorboden oder oberhalb des Reaktorbodens in dem Reaktorinnenraum angeordnet.

Es ist bevorzugt, dass der Gasstrom aus diesen Einlassdüsen mit der erwähnten Geschwindigkeit kleiner 7,5 m/s, bevorzugt kleiner 5 m/s, besonders bevorzugt kleiner 2,5 m/s, austritt. Um zu gewährleisten, dass auch bei hohen Durchsätzen diese Strömungsgeschwindigkeiten eingehalten werden können, wird die Anzahl der Düsen gegebenenfalls sehr hoch gewählt. Ein weiterer Parameter, der auf die Strömungsgeschwindigkeit Einfluss nehmen kann, ist der Durchmesser der Öffnung, durch die der Gasstrom aus der Düse austritt. Bevorzugt handelt es sich bei der Öffnung um eine kreisrunde Öffnung. Der Durchmesser der Öffnung liegt vorzugsweise im Bereich von 10 mm bis 80 mm, insbesondere im Bereich von 20 mm bis 60 mm.

In dem erfindungsgemäßen Reaktor ist eine dreistellige Anzahl an Düsen angeordnet. Im Rahmen der vorliegenden Erfindung einsetzbare Reaktoren weisen zwischen 100 und 300 Düsen auf. Die Dimensionen des erfindungsgemäßen Reaktors und/oder die Anzahl der Düsen und/oder der Durchmesser der Öffnungen sind auf einen Betriebsvolumenstrom zwischen 10.000 m³ und 25.000 m³ an monosilanhaltigem Gas pro Stunde abgestimmt (die Zahlenangaben beziehen sich auf Volumina bei 1,01325 bar und 323 K). Die tatsächlich einzuspeisenden Volumina sind aufgrund der oben erwähnten Komprimierung des Gasstroms auf Drücke im Bereich von 2,5 bis 10 bar geringer. Damit kann die Geschwindigkeit des Gases beim Eintritt in den Reaktor gering gehalten werden, was aus den oben bereits erwähnten Gründen (Vermeidung von Turbulenzen sowie Vermeidung einer unerwünschten Abkühlung der Silizium-Stäbe) bevorzugt ist.

In nahezu sämtlichen bevorzugten Ausführungsformen der vorliegenden Erfindung wird der monosilanhaltige Gasstrom vertikal von unten nach oben durch den Reaktor geführt und passiert dabei die hocherhitzte Oberfläche, insbesondere die hocherhitzten Silizium-Stäbe. Am oberen Ende des Reaktors kann der Gasstrom nach unten umgelenkt werden, wie dies in der DE 10 2011 089 695 A1 beschrieben ist, und über den Reaktorboden wieder aus dem Reaktor austreten. Alternativ kann der Gasstrom auch durch einen Auslass am oberen Ende des Reaktoroberteils aus dem Reaktor abgeführt werden. Darüber hinaus ist es natürlich möglich, das Gasgemisch aus dem Reaktor über ein Rohr, das durch den Reaktorboden geführt ist und weit in den Innenraum des Reaktors hineinragt, abzuführen. Ein solches Reaktordesign ist in der DE 10 2009 003 368 B3 beschrieben.

All diese Ausführungsformen bieten den Vorteil, dass Verwirbelungen im Bereich der hocherhitzten Oberfläche minimiert werden.

Das Aufbereiten des Gasstroms in Schritt (4) umfasst mindestens einen, bevorzugt mehrere, insbesondere alle der folgenden Teilschritte:
- Der Gasstrom wird abgekühlt
- Der Gasstrom wird durch einen Filter geführt
- Der Gasstrom wird mit Monosilan versetzt.

Das Abkühlen dient dazu, möglichst schnell Zersetzungsreaktionen in der Gasphase zu beenden, nachdem der Gasstrom aus dem Reaktor abgeführt wurde. Wie oben erwähnt, kann die Temperatur des aus dem Reaktor ausströmenden Gases in bevorzugten Ausführungsformen bis zu 700 °C betragen.

Gegebenenfalls werden staubförmige Nebenprodukte, die durch Zerfallsreaktionen in der Gasphase gebildet wurden, mit dem Gasstrom aus dem Reaktor geschleppt. Diese müssen natürlich abgetrennt werden. Vor allem hierzu dient der genannte Filter.

Wie oben angesprochen, wird der Gasstrom durch einen Verdichter oder durch ein Gebläse in dem Kreislaufsystem zirkuliert. Es hat sich als besonders vorteilhaft herausgestellt, das Monosilan zwischen diesem Verdichter / Gebläse und dem Eingang in den Reaktor in den Gasstrom einzuspeisen. Der Grund dafür liegt darin, dass sich durch die Monosilan-Zugabe die Dichte des Gasstromes signifikant erhöhen kann, was für den Verdichter / das Gebläse ein potentielles Problem darstellen kann. Wird die Konzentration an Monosilan im Gasstrom - bezogen auf die Strömungsrichtung des Gasstroms in dem Kreislaufsystem - hinter dem Verdichter / Gebläse aber vor dem Reaktor in das Kreislaufsystem eingespeist, so ist die Belastung des Verdichters / Gebläses minimiert.

Die erfindungsgemäße Anlage dient zur Durchführung des oben beschriebenen Verfahrens. Sie umfasst mindestens die folgenden Komponenten:
(1) ein Kreislaufsystem, das darauf ausgelegt ist, dass in ihm ein monosilanhaltiger Gasstrom bei einem Betriebsdruck im Bereich zwischen 2,5 bar und 10 bar zirkulierbar ist,
(2) einen Reaktor, der Teil des Kreislaufsystems ist und der ein Mittel zum Einspeisen des monosilanhaltigen Gasstroms in den Reaktor sowie einen Auslass zum Abführen des Gasstroms aus dem Reaktor aufweist,
(3) ein Mittel zur Bereitstellung einer hocherhitzten Silizium-Oberfläche innerhalb des Reaktors,
(4) ein Mittel zum Abkühlen des aus dem Reaktor abgeführten Gasstroms,
(5) mindestens ein Mittel zum Aufbereiten des Gasstroms, einschließlich einem Mittel zum Erhöhen der Konzentration an Monosilan im Gasstrom und
(6) ein Mittel zum Zirkulieren des Gasstroms bei dem genannten Betriebsdruck.

Für die erfindungsgemäße Anlage geeignete Reaktoren einschließlich zum Einspeisen des monosilanhaltigen Gasstroms geeignete Düsen (als Mittel zum Einspeisen des Gasstroms) sind im Rahmen der Beschreibung des erfindungsgemäßen Verfahrens erwähnt. Darüber hinaus offenbart das erfindungsgemäße Verfahren hocherhitzte Silizium-Stäbe als bevorzugtes Mittel der Wahl zur Bereitstellung einer hocherhitzten Silizium-Oberfläche sowie ein bevorzugtes Mittel zum Zirkulieren des Gasstroms bei dem genannten Betriebsdruck, nämlich den erwähnten Verdichter oder das Gebläse.

Bei dem Mittel zum Abkühlen des aus dem Reaktor abgeführten Gasstroms handelt es sich bevorzugt um mindestens einen Wärmetauscher. Das mindestens eine Mittel zum Aufbereiten des Gasstroms umfasst bevorzugt den oben genannten Filter.

Bei dem Mittel zum Erhöhen der Konzentration an Monosilan im Gasstrom kann es sich im einfachsten Fall um eine Verbindung zu einer Monosilan-Quelle handelt, die über ein Regelventil mit dem Kreislaufsystem gekoppelt ist. In Übereinstimmung mit den obigen Ausführungen ist die Kopplung hinter dem Verdichter / Gebläse aber vor dem Reaktor realisiert.

Weitere Merkmale der Erfindung sowie aus der Erfindung resultierende Vorteile ergeben sich aus der nachfolgenden Beschreibung der Zeichnung. Diese dient lediglich zur Erläuterung und zum besseren Verständnis der Erfindung und ist in keiner Weise einschränkend zu verstehen.

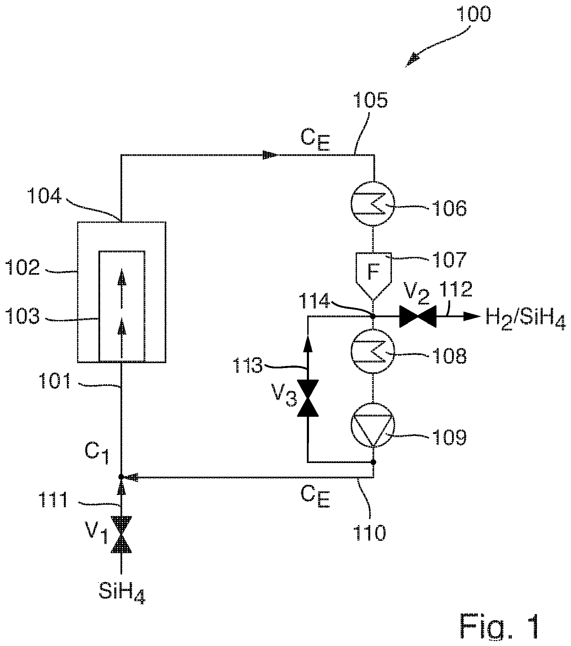

Dargestellt ist in Fig. 1 ein Fließbild einer Ausführungsform einer erfindungsgemäßen Anlage 100 (schematische Darstellung). Über die Leitung 101 wird ein Gasgemisch aus Wasserstoff und Monosilan in den Reaktor 102 eingespeist. In dem Reaktor sind U-förmige Silizium-Stäbe 103 angeordnet. Diese sind auf eine Temperatur größer 800 °C erhitzt. Monosilan, das in Kontakt mit den hocherhitzten Stäben tritt, zersetzt sich an deren Oberfläche unter Bildung einer Schicht aus metallischem Silizium.

Das Monosilan-Wasserstoff-Gemisch durchströmt den Reaktor 102 von unten nach oben und tritt am Ausgang 104 aus dem Reaktor aus. Über die Leitung 105 wird das Gasgemisch einer Aufbereitung zugeführt. Zunächst wird es mittels des Wärmetauschers 106 gekühlt. Anschließend wird es mittels des Filters 107 von partikelförmigen Verunreinigungen befreit. Im fakultativen Wärmetauscher 108 kann es nochmals gekühlt werden. Das Gebläse 109 dient dazu, das Gasgemisch im Kreislauf durch die beschriebenen Bestandteile der Anlage 100 zu zirkulieren. Über die Leitung 110 wird das Gasgemisch wieder dem Reaktor 102 zugeführt.

Ein Teil des Gasgemischs kann nach dem Durchlaufen des Gebläses 109 aus der Leitung 110 abgezweigt und über die Bypass-Leitung 113 am Punkt 114 vor dem Gebläse 109 wieder in den Kreislauf eingespeist werden. Der Anteil des abgezweigten Gasgemischs kann über das Ventil V₃ geregelt werden. Eine anteilige Rückführung des Gasgemischs kann insbesondere im Anfangsstadium der Zersetzung zweckmäßig sein. In diesem Stadium kann es vorkommen, dass das Gebläse ohne die Rückführung des Gasgemischs 109 in Unterlast betrieben wird, weil die Strömungsgeschwindigkeit, mit der das Gasgemisch in dem Kreislaufsystem zirkuliert wird, noch sehr niedrig sein muss.

Von großer Bedeutung ist die Leitung 111. Über diese wird Monosilan aus einer Monosilan-Quelle in das beschriebene Kreislaufsystem eingespeist. Eine Regelung der Monosilan-Zufuhr kann über das Ventil V₁ erfolgen. Von Bedeutung ist dabei, dass die Einspeisung des Gasgemischs in Strömungsrichtung hinter dem Gebläse 109 erfolgt. Über die Leitung 112 kann ein im Kreislaufsystem entstehender Überdruck abgebaut werden. Hierzu kann beispielsweise das Überdruckventil V₂ dienen.

Das im Kreislauf geführte Gasgemisch weist in Bezug auf den Anteil an Monosilan im Gasgemisch unmittelbar nach dessen Einspeisung über die Leitung 111 ein Maximum auf (C_{I}). In Folge der thermischen Zersetzung des Monosilans im Reaktor 102 liegt die Konzentration an Monosilan im Gasgemisch nach dem Verlassen des Reaktors deutlich niedriger (C_{E}), wobei die Differenz zwischen C_{I} und C_{E} weniger als 0,5 Mol-% beträgt. Während der Abkühlphase und dem Reinigen des Gasgemischs verändert sich die Konzentration nicht.

Der Betriebsdruck innerhalb des beschriebenen Kreislaufsystems beträgt 6 bar.

## Patentansprüche

1. Verfahren zur Zersetzung von Monosilan, bei dem ein monosilanhaltiger Gasstrom in einem Kreislaufsystem, das einen Reaktor zur Zersetzung des im Gasstrom enthaltenen Monosilans umfasst, zirkuliert wird, umfassend die Schritte
(1) Einspeisen eines monosilanhaltigen Gasstroms in den Reaktor,
(2) Inkontaktbringen des Gasstroms mit einer hocherhitzten Oberfläche innerhalb des Reaktors, an der ein Teil des im Gasstroms enthaltenen Monosilans unter Abscheidung einer festen Siliziumschicht auf der Oberfläche zersetzt wird, so dass die Konzentration des Monosilans im Gasstrom abfällt,
(3) Abführen des Gasstroms aus dem Reaktor,
(4) Aufbereiten des Gasstroms, einschließlich mindestens teilweises, vorzugsweise vollständiges Ausgleichen des in Folge der Zersetzung auftretenden Abfalls der Monosilan-Konzentration durch Zugabe von Monosilan und
(5) Wiedereinspeisen des aufbereiteten, monosilanhaltigen Gasstroms in den Reaktor gemäß Schritt (1),
wobei während der Abscheidung innerhalb des Kreislaufsystems ein Betriebsdruck im Bereich von 2,5 bar bis 10 bar (absolut) eingestellt wird und der Gasstrom mit einer Geschwindigkeit kleiner 7,5 m/s, bevorzugt kleiner 5 m/s, besonders bevorzugt kleiner 2,5 m/s, in den Reaktor eintritt.

2. Verfahren nach Anspruch 1, **dadurch gekennzeichnet, dass** die Konzentration an Monosilan im gemäß Schritt (1) bzw. (5) in den Reaktor einzuspeisenden Gasstrom während der Abscheidung in einem Bereich zwischen 0,5 Vol-% und 5 Vol-%, bevorzugt zwischen 0,5 Vol-% und 3 Vol-%, gehalten wird.

3. Verfahren nach einem der Ansprüche 1 oder 2, **dadurch gekennzeichnet, dass** die Konzentration an Monosilan im Gasstrom in Schritt (4) um nicht mehr als 1 Vol-%, bevorzugt um nicht mehr als 0,5 Vol-%, besonders bevorzugt um nicht mehr als 0,25 Vol-%, angehoben wird.

4. Verfahren nach einem der Ansprüche 2 oder 3, **dadurch gekennzeichnet, dass** mit steigender Dicke der Siliziumschicht (auf der Oberfläche) die Masse an Monosilan des gemäß Schritt (1) bzw. (5) in den Reaktor eingespeisten Gasstroms pro Zeiteinheit graduell erhöht wird, wobei es bevorzugt ist, dass zur Erhöhung der Masse an Monosilan pro Zeiteinheit die Konzentration an Monosilan im Gasstrom in Schritt (4) graduell angehoben wird und/oder die Strömungsgeschwindigkeit, mit der der monosilanhaltige Gasstrom in dem Kreislaufsystem zirkuliert, erhöht wird.

5. Verfahren nach einem der vorhergehenden Ansprüche, **dadurch gekennzeichnet, dass** die Temperatur des Gasstroms
• beim Einspeisen in den Reaktor auf einen Wert im Bereich von 25 °C bis 75 °C, insbesondere im Bereich von 40 °C bis 60 °C, eingestellt wird und/oder
• beim Abführen aus dem Reaktor im Bereich von 400 °C bis 700 °C, insbesondere im Bereich von 500 °C bis 600 °C, liegt.

6. Verfahren nach einem der vorhergehenden Ansprüche, **dadurch gekennzeichnet, dass** die hocherhitzte Oberfläche in Form hocherhitzter Silizium-Stäbe bereitgestellt wird und mit steigender Dicke der Siliziumschicht größer wird.

7. Verfahren nach einem der vorhergehenden Ansprüche, **dadurch gekennzeichnet, dass** die Konzentration an Monosilan in dem aus dem Reaktor abgeführten Gasstrom durch eine Messung bestimmt und in Abhängigkeit des Messergebnisses die Monosilanzugabe in Schritt (4) (quantitativ) gesteuert/geregelt wird.

8. Verfahren nach einem der vorhergehenden Ansprüche, **dadurch gekennzeichnet, dass** die Dicke der Siliziumschicht rechnerisch oder durch Messung bestimmt und in Abhängigkeit des Messergebnisses die graduelle Erhöhung der Masse an Monosilan in dem gemäß Schritt (1) bzw. (5) in den Reaktor eingespeisten Gasstroms pro Zeiteinheit gesteuert/geregelt wird.

9. Verfahren nach einem der vorhergehenden Ansprüche, **dadurch gekennzeichnet, dass** der Reaktor mindestens eines der folgenden Merkmale aufweist:
• Er umfasst einen Reaktorboden und ein darauf montiertes Reaktoroberteil, die zusammen einen Reaktorinnenraum einschließen, in dem die Silizium-Stäbe angeordnet werden, insbesondere in auf dem Reaktorboden angeordneten oder in den Reaktorboden integrierten Halterungen.
• Die Silizium-Stäbe innerhalb des Reaktors sind bevorzugt vertikal zum Reaktorboden ausgerichtet und weisen in bevorzugten Ausführungsformen innerhalb des Reaktorinnenraums senkrecht nach oben.
• Die Silizium-Stäbe weisen jeweils zwei freie Enden auf, wobei jedem dieser Enden eine der Halterungen zugeordnet ist.

10. Verfahren nach Anspruch 9, **dadurch gekennzeichnet, dass** der monosilanhaltige Gasstrom über Einlassdüsen in den Reaktor eingespeist wird, wobei es bevorzugt ist,
• dass die Düsen in den Reaktorboden integriert oder auf dem Reaktorboden / oberhalb des Reaktorbodens in dem Reaktorinnenraum angeordnet sind
und/oder
• dass der Gasstrom aus den Einlassdüsen mit der Geschwindigkeit < 7,5 m/sec, bevorzugt < 5 m/sec, besonders bevorzugt < 2,5 m/sec, austritt.

11. Verfahren nach einem der vorhergehenden Ansprüche, insbesondere nach Anspruch 10, **dadurch gekennzeichnet, dass** der monosilanhaltige Gasstrom
• vertikal von unten nach oben durch den Reaktor geführt wird
und/oder
• durch einen Auslass an der Spitze des Reaktoroberteils aus dem Reaktor abgeführt wird.

12. Verfahren nach einem der vorhergehenden Ansprüche, **dadurch gekennzeichnet, dass** das Aufbereiten des Gasstroms in Schritt (4) mindestens einen der folgenden Teilschritte umfasst:
• Der Gasstrom wird abgekühlt
• Der Gasstrom wird durch einen Filter geführt
• Der Gasstrom wird mit Monosilan versetzt

13. Anlage zur Zersetzung von Monosilan, insbesondere gemäß einem Verfahren nach einem der vorhergehenden Ansprüche, mit
(1) einem Kreislaufsystem, in dem ein monosilanhaltiger Gasstrom bei einem Betriebsdruck zwischen 2,5 bar und 10 bar zirkulierbar ist,
(2) einem Reaktor, der Teil des Kreislaufsystems ist und ein Mittel zum Einspeisen des monosilanhaltigen Gasstroms in den Reaktor sowie einen Auslass zum Abführen des Gasstroms aus dem Reaktor aufweist,
(3) einem Mittel zur Bereitstellung einer hocherhitzten Siliziumoberfläche innerhalb des Reaktors,
(4) einem Mittel zum Abkühlen des aus dem Reaktor abgeführten Gasstroms,
(5) Mitteln zum Aufbereiten des Gasstroms, einschließlich einem Mittel zum Erhöhen der Konzentration an Monosilan im Gasstrom und
(6) einem Mittel zum Zirkulieren des Gasstroms bei dem genannten Betriebsdruck,
wobei
(7) es sich bei dem Mittel zum Einspeisen des monosilanhaltigen Gasstroms um zwischen 100 und 300 Düsen handelt und
(8) die Düsen jeweils eine Öffnung aufweisen, durch die der Gasstrom aus der Düse austritt, und
(9) die Dimensionen des erfindungsgemäßen Reaktors und/oder die Anzahl der Düsen und/oder der Durchmesser der Öffnungen auf einen Betriebsvolumenstrom zwischen 10.000 m³ und 25.000 m³ (bezogen auf Volumina bei 1,01325 bar und 323 K) an monosilanhaltigem Gas pro Stunde abgestimmt sind.

14. Anlage nach Anspruch 13, **dadurch gekennzeichnet, dass** das Mittel zum Erhöhen der Konzentration an Monosilan im Gasstrom bezogen auf die Strömungsrichtung des Gasstroms in dem Kreislaufsystem unmittelbar hinter dem Mittel zum Zirkulieren des Gasstroms angeordnet ist.

## Claims

1. Process for decomposition of monosilane where a monosilane-containing gas stream is circulated in a circuit system comprising a reactor for decomposition of the monosilane present in the gas stream which comprises the steps of
(1) injecting a monosilane-containing gas stream into the reactor,
(2) bringing the gas stream into contact with a highly heated surface inside the reactor at which surface a portion of the monosilane present in the gas stream is decomposed to deposit a solid silicon layer on the surface so that the concentration of the monosilane in the gas stream falls,
(3) discharging the gas stream from the reactor,
(4) reprocessing the gas stream including at least partially, preferably fully, compensating the fall in the monosilane concentration resulting from the decomposition by addition of monosilane and
(5) reinjecting the reprocessed, monosilane-containing gas stream into the reactor according to step (1),
wherein during the deposition inside the circuit system an operating pressure in the range from 2.5 bar to 10 bar (absolute) is established and the gas stream enters the reactor at a velocity of less than 7.5 m/s, preferably less than 5 m/s, particularly preferably less than 2.5 m/s.

2. Process according to Claim 1, **characterized in that** the concentration of monosilane in the gas stream to be injected into the reactor according to step (1)/(5) is maintained in a range between 0.5 vol% and 5 vol%, preferably between 0.5 vol% and 3 vol% during the deposition.

3. Process according to either of Claims 1 and 2, **characterized in that** in step (4) the concentration of monosilane in the gas stream is raised by not more than 1 vol%, preferably by not more than 0.5 vol%, particularly preferably by not more than 0.25 vol%.

4. Process according to either of Claims 2 and 3, **characterized in that** with increasing thickness of the silicon layer (on the surface) the mass of monosilane in the gas stream injected into the reactor according to step (1)/(5) per unit time is gradually increased, wherein the mass of monosilane per unit time is preferably increased by gradually raising the concentration of monosilane in the gas stream in step (4) and/or by increasing the flow rate at which the monosilane-containing gas stream circulates in the circuit system.

5. Process according to any of the preceding claims, **characterized in that** the temperature of the gas stream
• upon injection into the reactor is adjusted to a value in the range from 25°C to 75°C, in particular in the range from 40°C to 60°C, and/or
• upon discharging from the reactor is in the range from 400°C to 700°C, in particular in the range from 500°C to 600°C.

6. Process according to any of the preceding claims, **characterized in that** the highly heated surface is provided in the form of highly heated silicon rods and increases in size with increasing thickness of the silicon layer.

7. Process according to any of the preceding claims, **characterized in that** the concentration of monosilane in the gas stream discharged from the reactor is determined via a measurement and the monosilane addition in step (4) is (quantitatively) open-/closed-loop controlled as a function of the measured result.

8. Process according to any of the preceding claims, **characterized in that** the thickness of the silicon layer is determined arithmetically or by measurement and the gradual increasing of the mass of monosilane in the gas stream injected into the reactor according to step (1)/(5) per unit time is open-/closed-loop controlled as a function of the measured result.

9. Process according to any of the preceding claims, **characterized in that** the reactor has at least one of the following features:
• Said reactor comprises a reactor bottom and a reactor top mounted thereupon which together encompass a reactor interior in which the silicon rods are arranged in particular in holders arranged on the reactor bottom or integrated into the reactor bottom.
• The silicon rods inside the reactor are preferably oriented vertically with respect to the reactor bottom and in preferred embodiments point perpendicularly upwards inside the reactor interior.
• The silicon rods each have two free ends, each of these ends having one of the holders assigned to it.

10. Process according to claim 9, **characterized in that** the monosilane-containing gas stream is injected into the reactor via inlet nozzles, wherein preferably
• the nozzles are integrated into the reactor bottom or arranged on the reactor bottom or above the reactor bottom in the reactor interior
and/or
• the gas stream exits the inlet nozzles at a velocity of < 7.5 m/s, preferably < 5 m/s, particularly preferably < 2.5 m/s.

11. Process according to any of the preceding claims, in particular according to Claim 10, **characterized in that** the monosilane-containing gas stream
• is passed vertically through the reactor from bottom to top
and/or
• is discharged from the reactor through an outlet at the tip of the reactor top.

12. Process according to any of the preceding claims, **characterized in that** the reprocessing of the gas stream in step (4) comprises at least one of the following substeps:
- The gas stream is cooled
- The gas stream is passed through a filter
- The gas stream is admixed with monosilane.

13. Plant for decomposition of monosilane, in particular in accordance with the process according to any of the preceding claims, having
(1) a circuit system in which a monosilane-containing gas stream can be circulated at an operating pressure between 2.5 bar and 10 bar,
(2) a reactor which is part of the circuit system and which comprises a means for injecting the monosilane-containing gas stream into the reactor and an outlet for discharging the gas stream from the reactor,
(3) a means for providing a highly heated silicon surface inside the reactor,
(4) a means for cooling the gas stream discharged from the reactor,
(5) means for reprocessing the gas stream, including a means for increasing the concentration of monosilane in the gas stream, and
(6) a means for circulating the gas stream at the cited operating pressure.
wherein
(7) the means for injecting the monosilane-containing gas stream is between 100 and 300 nozzles and
(8) the nozzles each have an opening through which the gas stream exits the nozzle and
(9) the dimensions of the reactor according to the invention and/or the number of nozzles and/or the diameter of the openings are geared to an operating volume flow between 10 000 m³ and 25 000 m³ (based on volumes at 1.01325 bar and 323 K) of monosilane-containing gas per hour.

14. Plant according to Claim 13, **characterized in that** the means for increasing the concentration of monosilane in the gas stream is arranged immediately downstream of the means for circulating the gas stream based on the direction of flow of the gas stream in the circuit system

## Revendications

1. Procédé de décomposition de monosilane, selon lequel un courant gazeux contenant du monosilane est mis en circulation dans un système de circuit, qui comprend un réacteur pour la décomposition du monosilane contenu dans le courant gazeux, comprenant les étapes suivantes :
(1) l'introduction d'un courant gazeux contenant du monosilane dans le réacteur,
(2) la mise en contact du courant gazeux avec une surface hautement chauffée à l'intérieur du réacteur, sur laquelle une partie du monosilane contenu dans le courant gazeux est décomposé avec dépôt d'une couche de silicium solide sur la surface, de telle sorte que la concentration du monosilane dans le courant gazeux diminue,
(3) le déchargement du courant gazeux du réacteur,
(4) le conditionnement du courant gazeux, y compris la compensation au moins partielle, de préférence totale, de la diminution de la concentration de monosilane qui se produit en conséquence de la décomposition par ajout de monosilane, et
(5) la réintroduction du courant gazeux contenant du monosilane conditionné dans le réacteur selon l'étape (1),
une pression d'exploitation dans la plage allant de 2,5 bar à 10 bar (absolu) étant ajustée à l'intérieur du système de circuit pendant le dépôt, et le courant gazeux entrant dans le réacteur avec une vitesse inférieure à 7,5 m/s, de préférence inférieure à 5 m/s, de manière particulièrement préférée inférieure à 2,5 m/s.

2. Procédé selon la revendication 1, **caractérisé en ce que** la concentration en monosilane dans le courant gazeux à introduire dans le réacteur selon l'étape (1) ou (5) est maintenue pendant le dépôt dans une plage comprise entre 0,5 % en volume et 5 % en volume, de préférence entre 0,5 % en volume et 3 % en volume.

3. Procédé selon l'une quelconque des revendications 1 ou 2, **caractérisé en ce que**, dans l'étape (4), la concentration en monosilane dans le courant gazeux n'est pas augmentée de plus de 1 % en volume, de préférence pas de plus de 0,5 % en volume, de manière particulièrement préférée pas de plus de 0,25 % en volume.

4. Procédé selon l'une quelconque des revendications 2 ou 3, **caractérisé en ce que** lorsque l'épaisseur de la couche de silicium (sur la surface) croît, la masse de monosilane du courant gazeux introduit dans le réacteur selon l'étape (1) ou (5) par unité de temps est graduellement augmentée ; de préférence, pour l'augmentation de la masse de monosilane par unité de temps, la concentration en monosilane dans le courant gazeux dans l'étape (4) étant graduellement augmentée et/ou la vitesse d'écoulement avec laquelle le courant gazeux contenant du monosilane circule dans le système de circuit étant augmentée.

5. Procédé selon l'une quelconque des revendications précédentes, **caractérisé en ce que** la température du courant gazeux
- est ajustée à une valeur dans la plage allant de 25 °C à 75 °C, notamment dans la plage allant de 40 °C à 60 °C, lors de l'introduction dans le réacteur, et/ou
- se situe dans la plage allant de 400 °C à 700 °C, notamment dans la plage allant de 500 °C à 600 °C, lors du déchargement du réacteur.

6. Procédé selon l'une quelconque des revendications précédentes, **caractérisé en ce que** la surface hautement chauffée est mise à disposition sous la forme de baguettes de silicium hautement chauffées et devient plus grande lorsque l'épaisseur de la couche de silicium croît.

7. Procédé selon l'une quelconque des revendications précédentes, **caractérisé en ce que** la concentration en monosilane dans le courant gazeux déchargé du réacteur est déterminée par une mesure et l'ajout de monosilane dans l'étape (4) est commandé/réglé (quantitativement) en fonction du résultat de la mesure.

8. Procédé selon l'une quelconque des revendications précédentes, **caractérisé en ce que** l'épaisseur de la couche de silicium est déterminée par calcul ou par mesure, et l'augmentation graduelle de la masse de monosilane dans le courant gazeux introduit dans le réacteur selon l'étape (1) ou (5) par unité de temps est commandée/réglé en fonction du résultat de la mesure.

9. Procédé selon l'une quelconque des revendications précédentes, **caractérisé en ce que** le réacteur présente au moins une des caractéristiques suivantes :
- il comprend un fond de réacteur et une partie supérieure de réacteur montée sur celui-ci, qui entourent ensemble une chambre intérieure de réacteur, dans laquelle les baguettes de silicium sont agencées, notamment dans des supports agencés sur le fond de réacteur ou intégrés dans le fond de réacteur,
- les baguettes de silicium à l'intérieur du réacteur sont de préférence orientées verticalement par rapport au fond de réacteur et, selon des modes de réalisation préférés, sont dirigées perpendiculairement vers le haut à l'intérieur de la chambre intérieure de réacteur,
- les baguettes de silicium présentent respectivement deux extrémités libres, un des supports étant associé à chacune de ces extrémités.

10. Procédé selon la revendication 9, **caractérisé en ce que** le courant gazeux contenant du monosilane est introduit dans le réacteur par l'intermédiaire de buses d'entrée ; de préférence,
- les buses étant intégrées dans le fond de réacteur ou agencées sur le fond de réacteur/au-dessus du fond de réacteur dans la chambre intérieure de réacteur, et/ou
- le courant gazeux sortant des buses d'entrée avec une vitesse < 7,5 m/s, de préférence < 5 m/s, de manière particulièrement préférée < 2,5 m/s.

11. Procédé selon l'une quelconque des revendications précédentes, notamment selon la revendication 10, **caractérisé en ce que** le courant gazeux contenant du monosilane
- est acheminé au travers du réacteur verticalement du bas vers le haut,
et/ou
- est déchargé du réacteur par une sortie au sommet de la partie supérieure du réacteur.

12. Procédé selon l'une quelconque des revendications précédentes, **caractérisé en ce que** le conditionnement du courant gazeux dans l'étape (4) comprend au moins une des étapes partielles suivantes :
- le courant gazeux est refroidi,
- le courant gazeux est acheminé au travers d'un filtre,
- le courant gazeux est mélangé avec du monosilane.

13. Unité pour la décomposition de monosilane, notamment par un procédé selon l'une quelconque des revendications précédentes, munie
(1) d'un système de circuit, dans lequel un courant gazeux contenant du monosilane peut être mis en circulation à une pression d'exploitation comprise entre 2,5 bar et 10 bar,
(2) d'un réacteur, qui fait partie du système de circuit et comprend un moyen pour l'introduction du courant gazeux contenant du monosilane dans le réacteur, ainsi qu'une sortie pour le déchargement du courant gazeux du réacteur,
(3) d'un moyen pour la mise à disposition d'une surface de silicium hautement chauffée à l'intérieur du réacteur,
(4) d'un moyen pour le refroidissement du courant gazeux déchargé du réacteur,
(5) de moyens pour le conditionnement du courant gazeux, y compris un moyen pour l'augmentation de la concentration en monosilane dans le courant gazeux, et
(6) d'un moyen pour la mise en circulation du courant gazeux à la pression d'exploitation mentionnée,
(7) le moyen pour l'introduction du courant gazeux contenant du monosilane consistant en entre 100 et 300 buses, et
(8) les buses présentant respectivement une ouverture, au travers de laquelle le courant gazeux sort de la buse, et
(9) les dimensions du réacteur selon l'invention et/ou le nombre de buses et/ou le diamètre des ouvertures étant accordés à un débit volumique d'exploitation compris entre 10 000 m³ et 25 000 m³ (par rapport à des volumes à 1,01325 bar et 323 K) de gaz contenant du monosilane par heure.

14. Unité selon la revendication 13, **caractérisée en ce que** le moyen pour l'augmentation de la concentration en monosilane dans le courant gazeux est agencé directement derrière le moyen pour la mise en circulation du courant gazeux, par rapport à la direction d'écoulement du courant gazeux dans le système de circuit.
